(19) Europäisches Patentamt European Patent Office Office européen des brevets

(11) **EP 4 588 595 A1**

(12) **EUROPEAN PATENT APPLICATION**
published in accordance with Art. 153(4) EPC

(43) Date of publication:
**23.07.2025 Bulletin 2025/30**

(21) Application number: **24824733.0**

(22) Date of filing: **25.10.2024**

(51) International Patent Classification (IPC):
**B22F 10/28** (2021.01)

(52) Cooperative Patent Classification (CPC):
**B22F 10/28**

(86) International application number:
**PCT/CN2024/127300**

(87) International publication number:
**WO 2025/087374 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 CN 202311410163**

(71) Applicant: **Xi'an Space Engine Company Limited**
**Xi'an, Shaanxi 710100 (CN)**

(72) Inventors:
• **YANG, Huanqing**
**Xi'an, Shaanxi 710100 (CN)**

• **CAI, Jiaxin**
**Xi'an, Shaanxi 710100 (CN)**
• **XU, Ding**
**Xi'an, Shaanxi 710100 (CN)**
• **LV, Hui**
**Xi'an, Shaanxi 710100 (CN)**
• **PENG, Dongjian**
**Xi'an, Shaanxi 710100 (CN)**
• **WANG, Yun**
**Xi'an, Shaanxi 710100 (CN)**
• **WANG, Gaoyuan**
**Xi'an, Shaanxi 710100 (CN)**

(74) Representative: **Vitina, Maruta et al**
**Agency TRIA ROBIT**
**P.O. Box 22**
**1010 Riga (LV)**

(54) **METHOD FOR MANUFACTURING OUTER INJECTOR OF BAFFLE INJECTOR HAVING TRANSPIRATION COOLING FUNCTION**

(57) A method for producing an outer sub-injector of a baffled injector with a transpiration cooling function is provided, where the selective laser melting is performed with alloy powder as raw material according to a preset laser scanning path and preset selective laser melting parameters to obtain the outer sub-injector with the transpiration cooling function. The preset laser scanning path is determined according to a three-dimensional model, which is an annular periodic porous structure. The outer sub-injector is manufactured based on the transpiration cooling with the fuel as a cooling medium, so that the fuel will experience strong convective heat exchange with the outer sub-injector when flowing through the outer sub-injector. Moreover, the fuel forms a liquid film on the surface of the outer sub-injector, which hinders the heat transfer between the outer sub-injector and the high-temperature mainstream, so as to offer a thermal protection effect.

Fig. 8

EP 4 588 595 A1

**Description**

**CROSS-REFERENCE TO RELATED APPLICATIONS**

This application claims the benefit of priority from Chinese Patent Application No. 202311410163.2, titled "Method for producing outer sub-injector of baffled injector with transpiration cooling function" and filed on October 27, 2023. The content of the aforementioned application, including any intervening amendments thereto, is incorporated herein by reference in its entirety.

**TECHNICAL FIELD**

This application relates to cooling of thrust chambers of rocket engines, and more particularly to a method for producing an outer sub-injector of a baffled injector with a transpiration cooling function.

**BACKGROUND**

The baffled injector is composed of an injector extending into the combustion chamber. It not only plays a role in suppressing the tangential high-frequency unstable combustion, but also can direct the propellant to be injected into the combustion chamber for combustion, thereby improving the combustion efficiency. During operation of the engine, the temperature of the outer sub-injector substrate will reach an equilibrium with the temperature of the high-temperature gas in contact therewith, such that the outer sub-injector is maintained in a high-temperature state for a long time. In order to ensure the safe operation of the liquid rocket engine, it is necessary to effectively implement thermal protection on the outer sub-injector of the baffled injector.

In the prior art, it is often to cover the injector outer wall with an insulation material or an ablative material to form an insulation layer. However, the frequent start-shutdown of the liquid rocket engine during the repeated use process will cause large stress changes in the surface coating, leading to the occurrence of cracks and peeling. Therefore, there are some serious deficiencies in the existing methods of covering the insulation material. Configuring the outer sub-injector as a porous structure with a transpiration cooling function can not only achieve the adjustment of fuel permeability, reduced consumption of coolant and improvement of combustion efficiency, but also improve the reliability and reusability of the high-pressure combustion chamber by integrally forming the outer sub-inj ector of the baffled injector based on additive manufacturing.

**SUMMARY**

In order to overcome the deficiencies in the prior art, this application provides a method for producing an outer sub-injector of a baffled injector with a transpiration cooling function, which can achieve the effective thermal protection for the outer sub-injector under high-temperature conditions for a long time.

Technical solutions of the present disclosure are described as follows.

This application provides a method for producing an outer sub-injector of a baffled injector with a transpiration cooling function, comprising:

(S1) determining a unit cell configuration according to an operating condition of the outer sub-injector, and establishing a sheet-shaped minimal surface unit cell with a preset wall thickness according to a triply periodic minimal surface implicit function based on the unit cell configuration;

(S2) setting the number of radial-direction unit cell layers, the number of axial-direction unit cell layers and the number of circumferential-direction unit cells required by the outer sub-injector according to the unit cell configuration and a thickness of the outer sub-injector, so as to obtain a first volume domain of the outer sub-injector;

(S3) mapping the sheet-shaped minimal surface unit cell onto a fan-shaped region according to the number of the circumferential-direction unit cells, and annularly arraying the fan-shaped region to obtain a single-layer annular porous structure;

(S4) subjecting the single-layer annular porous structure to periodic arrangement along an axial direction of the outer sub-injector according to the number of the axial-direction unit cell layers, so as to obtain a single-layer cylindrical porous structure of the outer sub-injector;

(S5) repeating the step (S4) according to the number of the radial-direction unit cell layers to sequentially construct a plurality of single-layer cylindrical porous structures;

(S6) performing Boolean addition on the plurality of single-layer cylindrical porous structures to obtain a porous volume domain having a multi-layer cylindrical structure;

(S7) translating a center of the first volume domain of the outer sub-injector to an origin of a coordinate system, and subjecting the porous volume domain and the first volume domain of the outer sub-injector to Boolean intersection to obtain a second volume domain of the outer sub-injector having a porous structure; and

(S8) subjecting the second volume domain to selective laser melting according to a preset laser scanning path and preset selective laser melting parameters followed by wire cutting and removal of powder materials to obtain the outer sub-injector.

In some embodiments, in step (S1), the triply periodic minimal surface implicit function is expressed as:

$$\varphi(x, y, z) = \sin X \cos Y + \sin Y \cos X + \sin Z \cos X$$
$$X = 2\pi x / L$$
$$Y = 2\pi y / L$$
$$Z = 2\pi z / L \tag{1};$$

the sheet-shaped minimal surface unit cell is expressed as:

$$-c(x, y, z) \leq \phi(x, y, z) \leq +c(x, y, z) \tag{2};$$

wherein $\phi(x, y, z)$ is the triply periodic minimal surface implicit function, $c(x, y, z)$ is a level set value of the sheet-shaped minimal surface unit cell, $L$ is a length of the sheet-shaped minimal surface unit cell, $x$ is an x-axis coordinate of the sheet-shaped minimal surface unit cell, $y$ is a y-axis coordinate of the sheet-shaped minimal surface unit cell, and $z$ is a z-axis coordinate of the sheet-shaped minimal surface unit cell.

In some embodiments, an internal channel of the single-layer cylindrical porous structure is a millimeter-level channel.

In some embodiments, an outer diameter of the single-layer annular porous structure is $r + n \times a$; wherein $a$ is an annulus width of the single-layer annular porous structure, $n$ represents the number of the single-layer annular porous structure, and $r$ is an inner diameter of the first volume domain of the outer sub-injector.

In some embodiments, in step (S8), the selective laser melting is performed using a metal powder.

In some embodiments, the outer sub-injector is made of stainless steel, nickel-based alloy, titanium alloy or copper alloy.

In some embodiments, the step (S3) is performed through steps of:

projecting the sheet-shaped minimal surface unit cell onto an XOY plane to obtain a square with a side length of $a$; wherein the sheet-shaped minimal surface unit cell has a cube structure, and the origin of the coordinate system is located at a center of the square;

moving the square along a y-axis direction of the coordinate system by a length of $r$; wherein $r$ is an inner diameter of the single-layer annular porous structure;

transforming the square into the fan-shaped region by means of coordinate transformation according to a mapping method; and

circumferentially arraying the fan-shaped region with the origin of the coordinate system as center, so as to obtain the single-layer annular porous structure.

In some embodiments, coordinates of a point M in the fan-shaped region are $(y_1, x_1 * \pi/2a*n)$; wherein $a$ is an annulus width of the single-layer annular porous structure, and $n$ is the number of the single-layer annular porous structure; and $x_1 = x_0$, $y_1 = y_0 + r$, $r$ is the inner diameter of the single-layer annular porous structure, and $(x_0, y_0)$ indicates coordinates of the center of the square.

In some embodiments, internal channels of the outer sub-injector are communicated with each other in a circumferential direction, the axial direction and a radial direction of the outer sub-injector.

Compared to the prior art, the present disclosure has the following beneficial effects.

1. The outer sub-injector in the present disclosure is composed of minimal surface porous structures, which are arrayed to form densely-distributed microporous flow channels communicated with each other in three directions. The outer sub-injector is adopted for long-term thermal protection of the baffled injector to broaden the stable operating temperature range of the baffled injector. Moreover, the fan-shaped region is circumferentially arrayed to allow uniform liquid flow on an outer wall surface of the baffled injector with a large number of seepage holes.

2. The outer sub-injector in the present disclosure is integrally formed by laser selective melting technique. Under the premise of ensuring that the baffled injector has excellent cooling performance, the liquid flow characteristics of the baffled injector can be easily optimized by changing the porous configuration parameters.

3. Regarding the outer sub-injector in the present disclosure, the fuel is used as a cooling medium to form a uniform liquid film on the outer wall surface of the outer sub-injector. The fuel is injected into a combustion chamber through the outer sub-injector for combustion, which improves the combustion efficiency. Moreover, the liquid film formed on the outer wall surface of the outer sub-injector separates the high-temperature gas from the outer sub-injector, thereby effectively reducing the heat transfer of the high-temperature mainstream to the baffled injector.

## BRIEF DESCRIPTION OF THE DRAWINGS

Fig. 1 shows an outer sub-injector of a baffled injector according to an embodiment of the present disclosure; where (a): unit cell distribution of a volume domain of the outer sub-injector; (b): cross-sectional view of a porous structure of the outer sub-injector; and (c): top view of the porous structure;

Fig. 2 is a schematic diagram of the volume domain of the outer sub-injector according to an embodiment of the present disclosure;

Fig. 3 is a flow chart of modeling a single-layer annular porous structure of the outer sub-injector according to an embodiment of the present disclosure;

Fig. 4 schematically shows a G-type single-layer annular structure according to an embodiment of the present disclosure, where left: a front view; and right: a top view;

Fig. 5 is a schematic diagram of an axially-arrayed annular porous structure according to an embodiment of the present disclosure;

Fig. 6 is a schematic diagram of individual layers of cylindrical porous structures according to an embodiment of the present disclosure;

Fig. 7 schematically shows Boolean addition of a porous-structural volume domain and the volume domain of the outer sub-injector; and

Fig. 8 is a cross-sectional view of the outer sub-injector manufactured according to an embodiment of the present disclosure.

## DETAILED DESCRIPTION OF EMBODIMENTS

In order to make the technical solutions and advantages of the present disclosure clearer, the present disclosure will be further described in detail below in conjunction with the embodiments.

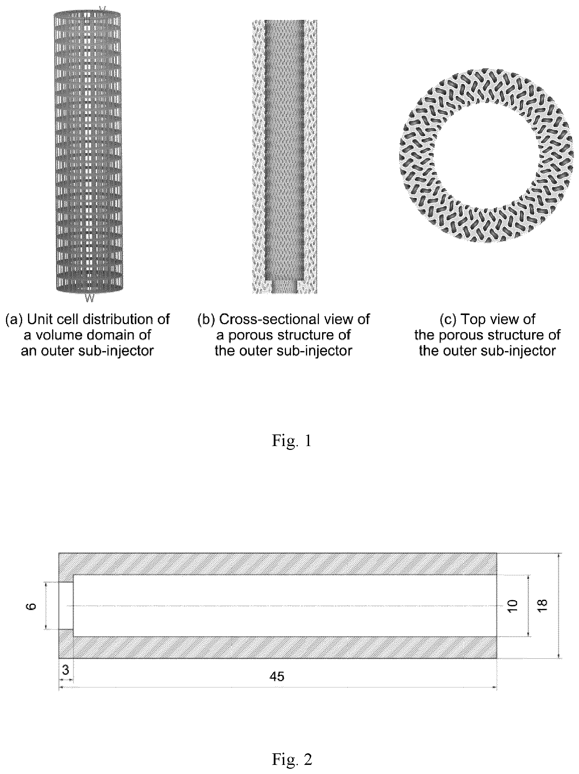

As shown in Fig. 1, a method for producing an outer sub-injector of a baffled injector with a transpiration cooling function is provided, which includes the following steps.

(S 1) A unit cell configuration is determined according to an operating condition of the outer sub-injector. A sheet-shaped minimal surface unit cell with a preset wall thickness is established according to a triply periodic minimal surface implicit function based on the unit cell configuration.

(S2) The number of radial-direction unit cell layers, the number of axial-direction unit cell layers and the number of circumferential-direction unit cells required by the outer sub-injector are set according to the unit cell configuration and a thickness of the outer sub-injector, so as to obtain a first volume domain of the outer sub-injector, as shown in Fig. 2.

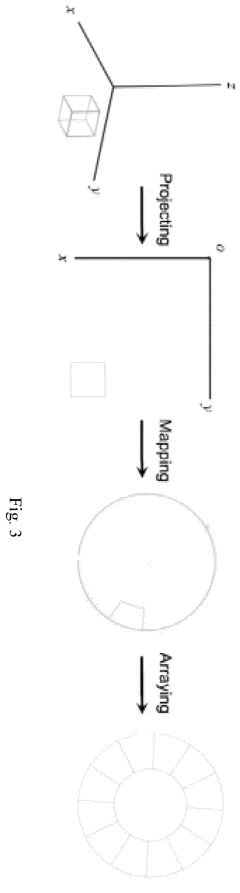

(S3) The sheet-shaped minimal surface unit cell is mapped onto a fan-shaped region according to the number of the circumferential-direction unit cells. The fan-shaped region is annularly arrayed to obtain a single-layer annular porous structure, as shown in Fig. 3.

(S4) The single-layer annular porous structure is subjected to periodic arrangement along an axial direction of the outer sub-injector according to the number of the axial-direction unit cell layers, so as to obtain a single-layer cylindrical porous structure of the outer sub-injector.

(S5) The step (S4) is repeated according to the number of the radial-direction unit cell layers to sequentially construct a plurality of single-layer cylindrical porous structures.

(S6) Boolean addition is performed on the plurality of single-layer cylindrical porous structures to obtain a porous volume domain having a multi-layer cylindrical structure.

(S7) A center of the first volume domain of the outer sub-injector is translated to an origin of a coordinate system. The porous volume domain and the first volume domain of the outer sub-injector are subjected to Boolean intersection to obtain a second volume domain of the outer sub-injector having a porous structure.

(S8) The second volume domain is subjected to selective laser melting (SLM) according to a preset laser scanning path and preset SLM parameters followed by wire cutting and removal of powder materials to obtain the outer sub-injector.

In an embodiment, in step (S1), the triply periodic minimal surface implicit function is expressed as:

$$\phi(x, y, z) = \sin X \cos Y + \sin Y \cos X + \sin Z \cos X$$
$$X = 2\pi x / L$$
$$Y = 2\pi y / L$$
$$Z = 2\pi z / L \tag{1}$$

The sheet-shaped minimal surface unit cell is expressed as:

$$-c(x, y, z) \leq \phi(x, y, z) \leq +c(x, y, z) \tag{2}$$

In Expressions (1)-(2), $\phi(x, y, z)$ is the triply periodic minimal surface implicit function, $c(x, y, z)$ is a level set value of the sheet-shaped minimal surface unit cell, $L$ is a length of the sheet-shaped minimal surface unit cell, $x$ is an x-axis coordinate of the sheet-shaped minimal surface unit cell, $y$ is a y-axis coordinate of the sheet-shaped minimal surface unit cell, and $z$ is a z-axis coordinate of the sheet-shaped minimal surface unit cell.

In an embodiment, an internal channel of the single-layer cylindrical porous structure is a millimeter-level channel.

In an embodiment, an outer diameter of the single-layer annular porous structure is $r + n \times a$ ; where $a$ is an annulus width of the single-layer annular porous structure, $n$ represents the number of the single-layer annular porous structure, and $r$ is an inner diameter of the first volume domain.

In an embodiment, in step (S8), the SLM is performed using a metal powder.

In an embodiment, the outer sub-injector is made of stainless steel, nickel-based alloy, titanium alloy or copper alloy.

In an embodiment, the step (S3) is performed through the following steps.

The sheet-shaped minimal surface unit cell is projected onto an XOY plane to obtain a square with a side length of $a$. The sheet-shaped minimal surface unit cell has a cube structure, and the origin of the coordinate system is located at a center of the square.

The square is moved along a y-axis direction of the coordinate system by a length of $r$, where $r$ is an inner diameter of the single-layer annular porous structure.

The square is transformed into the fan-shaped region by means of coordinate transformation according to a mapping method.

The fan-shaped region is circumferentially arrayed with the origin of the coordinate system as center, so as to obtain the single-layer annular porous structure.

In an embodiment, coordinates of a point M in the fan-shaped region are $(y_1, x_1 {}^* \pi / 2a{}^*n)$, where $a$ is an annulus width of the single-layer annular porous structure, and $n$ is the number of fan-shaped regions of the corresponding one of the single-layer annular porous structures.

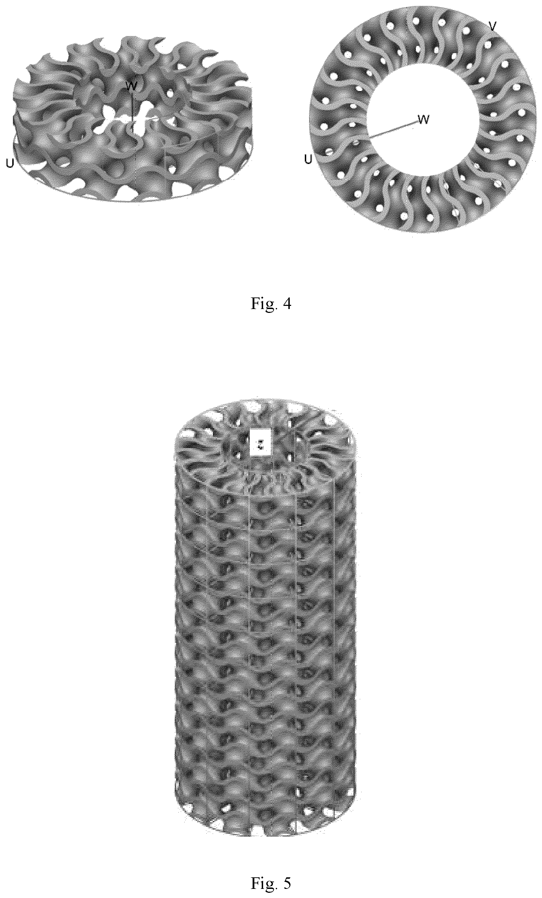

In an embodiment, $x_1 = x_0$, and $y_1 = y_0 + r$, where $r$ is the inner diameter of the single-layer annular porous structure, and $(x_0, y_0)$ indicates coordinates of the center of the square. In an embodiment, internal channels of the outer sub-injector are communicated with each other in a circumferential direction, the axial direction and a radial direction of the outer sub-injector, as shown in Fig. 5.

## EMBODIMENT

Provided herein is a method for producing an outer sub-injector of a baffled injector with a transpiration cooling function. The outer sub-injector is designed as a porous structure having multiple three-dimensional intercommunicated internal flow channels, so that the fuel can be used as a cooling medium to penetrate outward perpendicularly to the surface of the outer sub-injector. The porous structure is composed of minimal surface structures with the same wall thickness. The fuel experiences forced heat exchange with the outer sub-injector when flowing from the inner wall to the outer wall surface of the outer sub-inj ector. At the same time, the minimal surface porous structures are densely and periodically arranged to form the outer wall surface of the baffled injector with a large number of seepage holes. The internal flow channels formed by the periodic arrangement of the minimal surface porous structures are communicated with each other along the circumferential direction, the axial direction and the radial direction of the outer sub-injector. Such internal flow channels can eliminate uneven internal temperature distribution and prevent local overheating of the outer sub-injector. After the fuel flows through the outer wall surface of the porous structure, the outer sub-injector is evenly covered with a liquid film that isolates the heat transfer between the outer sub-injector and the high-temperature mainstream, so as to further improve the thermal protection capability of the outer sub-injector under high-temperature conditions for a long time.

The minimal surface structure adopted herein is a surface structure expressed by a mathematical implicit function. In this embodiment, an isosurface is calculated by controlling a constant control equation. The level set equations and the corresponding minimal surfaces are shown below.

Gyroid minimal surface:

$$\phi_G \equiv \sin X \cos Y + \sin Y \cos Z + \sin Z \cos X = c \qquad (1\text{-}1)$$

Diamond minimal surface:

$$\phi_D \equiv \cos X \cos Y \cos Z - \sin X \sin Y \sin Z = c \qquad (1\text{-}2)$$

Primitive minimal surface:

$$\phi_P \equiv \cos X + \cos Y + \cos Z = c \qquad (1\text{-}3)$$

The internal channels formed by the porous structure are all millimeter-level channels.

In order to make the outer wall of the outer sub-injector covered with a large number of seepage holes and ensure the consistency of the cooling medium flow rate at all locations on the outer wall, it is necessary to map the minimal surface unit cell onto a fan-shaped region, and then establish a cylindrical porous domain by circumferentially arraying the fan-shaped region, so as to ensure that the volume domain of the outer sub-injector is evenly divided into several identical regions. Then, the axial direction of the outer sub-injector is specified as a z-direction, and two directions in the XOY plane are specified as x-direction and y-direction. The mapping is performed through the following steps.

As shown in Fig. 3, first, in the XOY plane, the unit cell of the minimal surface structure is projected into a square ABCD with a side length of $a$. The origin of the coordinate system is located at a center of the square. Point M ($x_0$, $y_0$) is an arbitrary point in the square. Next, the square is moved along the y-direction by a length of $r$. Thus, coordinates of the point M can be expressed as ($x_1$, $y_1$), where $x_1 = x_0$, and $y_1 = y_0 + r$. The rectangular coordinate system is converted to a polar coordinate system by means of mapping. In this way, the coordinates of the point M can be converted to the polar angle and polar diameter coordinate in the polar coordinate system. Accordingly, the square is transformed into the fan-shaped region, and the coordinates of the point M in the polar coordinate system are ($y_1$, $x_1 * \pi / 2a*n$). Finally, the fan-shaped region in the XOY plane is circumferentially arrayed with the origin of the coordinate system as the center to obtain a single-layer annular porous structure with an annulus width of $a$.

$n$ is the number of the fan-shaped regions of the single-layer annular porous structure.

In an embodiment, according to the flow rate required by the cooling medium, multiple layers of annular porous structures can be set in the radial direction of the outer sub-injector.

The porous structure of the outer sub-injector is periodically and densely arranged in the axial direction of the outer sub-injector to obtain a single-layer cylindrical porous structure, where each axial-direction layer has an annular structure. A height of the outer sub-injector is $H$, a height of the single-layer annular porous structure is $h$, and the number of annular porous structures arranged in the entire axial direction is expressed as: $M = H / h$.

Furthermore, the second and third single-layer cylindrical porous structures of the outer sub-injector are completed in sequence through the above steps. The three single-layer annular porous structures are Boolean summed to obtain a porous volume domain having a multi-layer cylindrical structure. The porous volume domain and the volume domain of the outer sub-injector are subjected to Boolean intersection to obtain a porous volume domain having the multi-layer cylindrical structure as the model of the outer sub-injector.

A metal additive manufacturing equipment adopting SLM is used herein. A preset laser scanning path and preset SLM parameters are determined according to the obtained model of the outer sub-injector followed by wire cutting and removal of powder materials, so as to obtain the outer sub-injector with the transpiration cooling function.

The specific producing process is performed through the following steps.

(S 1) According to an actual operating condition of the baffled injector, a cube-type minimal surface unit cell is selected. A Gyroid lattice structure is adopted herein for modeling.

(S2) After determining the type of the unit cell, the number of radial-direction unit cell layers, the number of axial-direction unit cell layers and the number of circumferential-direction unit cells required by the outer sub-injector are set in combination with a thickness of the outer sub-injector, so as to obtain a first volume domain of the outer sub-injector, as shown in Fig. 2. The porous structure is arranged in three layers, where each layer has a thickness of 2 mm, the number of circumferential-direction unit cells is set to 12, and the number of axial-direction unit cell layers is set to 15. After the above geometric parameters of the porous region are determined, the fan-shaped mapping is performed for modeling.

(S3) The cube-type minimal surface unit cell having the Gyroid lattice structure is projected onto the XOY plane to obtain a square. The square is moving by 3 mm. The rectangular coordinates of the obtained square region are transformed into the polar coordinates according to the mapping method, such that the square region is transformed into a fan-shaped region, as shown in Fig. 3. A central angle of the fan-shaped region is 30°. The fan-shaped region is circumferentially arrayed with the origin of the coordinate system as the center to obtain a complete single-layer annular porous region consisting of 12 fan-shaped regions, as shown in Fig. 4.

(S4) The single-layer annular porous region is arrayed along the axial direction of the outer sub-injector with the number of axial arrays of 15. Boolean addition is performed on the obtained annular porous regions to obtain a first single-layer cylindrical porous region, as shown in Fig. 5.

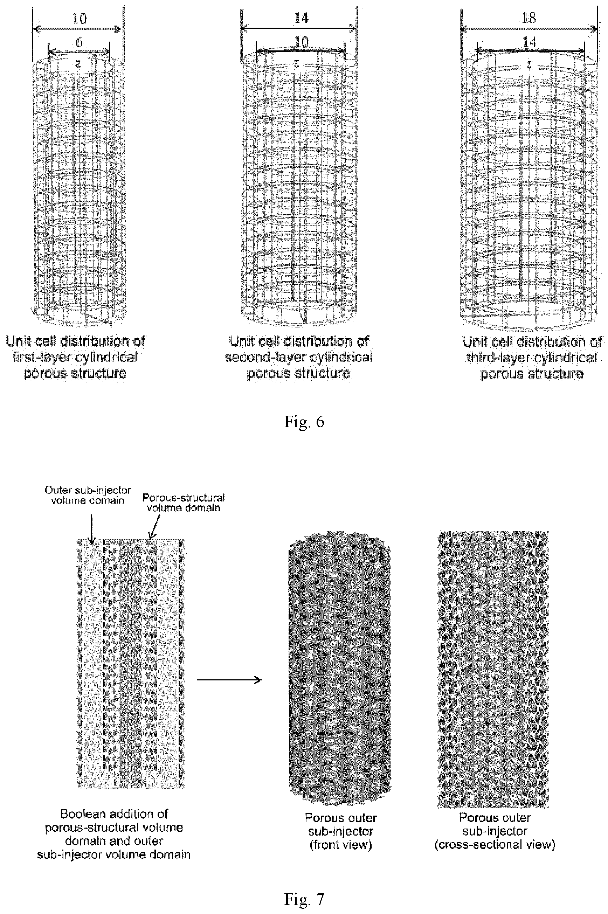

(S5) As shown in Fig. 6, the second and third single-layer cylindrical porous regions are completed in sequence according to the above steps. Boolean addition is performed on the first, second and third single-layer cylindrical porous regions, so as to obtain a multi-layer cylindrical porous region with an inner diameter of 6 mm and an outer diameter of 18 mm.

(S6) The obtained multi-layer cylindrical porous region and the first volume domain of the outer sub-injector are subjected to Boolean intersection to obtain a second volume domain of the outer sub-injector having a porous structure as a model of the outer sub-injector, as shown in Fig. 7.

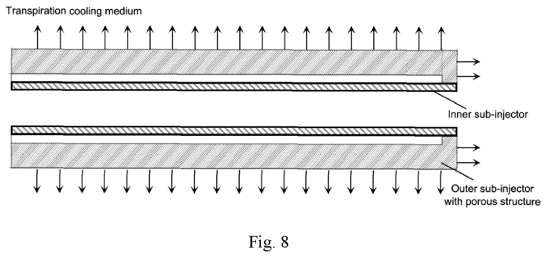

(S7) A SLM metal additive manufacturing equipment is adopted to perform SLM on the obtained model of the outer sub-inj ector according to the preset laser scanning path and the preset SLM parameters. After wire cutting and removal of powder materials, the outer sub-injector with the transpiration cooling function configured as a baffled injector thermal protection structure is obtained, as shown in Fig. 8.

The porous region obtained by this method divides the wall of the outer sub-injector into 12 identical regions, thereby ensuring the uniform fluidity of the liquid film on the outer wall surface. At the same time, the porous region has both the excellent cooling performance of the transpiration material and the excellent mechanical performance of the additive manufacturing component.

When the cooling performance of the porous outer sub-injector is iterated in the later stage, the porous configuration selection, the wall thickness of the porous region, and the number of circumferential/radial/axial unit cells can be changed to adapt to a variety of operating conditions that require active cooling. In addition, such implicit function-based modeling method leads to a high model iteration speed.

The embodiments described above are merely illustrative of the present application, and are not intended to limit the disclosure. Various modifications, changes and replacements made by those skilled in the art without departing from the spirit of the disclosure shall fall within the scope of the disclosure defined by the appended claims.

**Claims**

1. A method for producing an outer sub-injector of a baffled injector with a transpiration cooling function, comprising:

    (S1) determining a unit cell configuration according to an operating condition of the outer sub-injector, and establishing a sheet-shaped minimal surface unit cell with a preset wall thickness according to a triply periodic minimal surface implicit function based on the unit cell configuration;

    (S2) setting the number of radial-direction unit cell layers, the number of axial-direction unit cell layers and the number of circumferential-direction unit cells required by the outer sub-injector according to the unit cell configuration and a thickness of the outer sub-injector, so as to obtain a first volume domain of the outer sub-injector;

    (S3) mapping the sheet-shaped minimal surface unit cell onto a fan-shaped region according to the number of the circumferential-direction unit cells, and annularly arraying the fan-shaped region to obtain a single-layer annular porous structure;

    (S4) subjecting the single-layer annular porous structure to periodic arrangement along an axial direction of the outer sub-injector according to the number of the axial-direction unit cell layers, so as to obtain a single-layer cylindrical porous structure of the outer sub-injector;

    (S5) repeating the step (S4) according to the number of the radial-direction unit cell layers to sequentially construct a plurality of single-layer cylindrical porous structures;

    (S6) performing Boolean addition on the plurality of single-layer cylindrical porous structures to obtain a porous volume domain having a multi-layer cylindrical structure;

(S7) translating a center of the first volume domain of the outer sub-inj ector to an origin of a coordinate system, and subjecting the porous volume domain and the first volume domain of the outer sub-injector to Boolean intersection to obtain a second volume domain of the outer sub-injector having a porous structure; and
(S8) subjecting the second volume domain to selective laser melting according to a preset laser scanning path and preset selective laser melting parameters followed by wire cutting and removal of powder materials to obtain the outer sub-injector.

2. The method of claim 1, **characterized in that** in step (S1), the triply periodic minimal surface implicit function is expressed as:

$$\phi(x, y, z) = \sin X \cos Y + \sin Y \cos X + \sin Z \cos X$$
$$X = 2\pi x / L$$
$$Y = 2\pi y / L \qquad\qquad (1);$$
$$Z = 2\pi z / L$$

the sheet-shaped minimal surface unit cell is expressed as:

$$-c(x, y, z) \leq \phi(x, y, z) \leq +c(x, y, z) \qquad\qquad (2);$$

wherein $\phi(x, y, z)$ is the triply periodic minimal surface implicit function, $c(x, y, z)$ is a level set value of the sheet-shaped minimal surface unit cell, $L$ is a length of the sheet-shaped minimal surface unit cell, $x$ is an x-axis coordinate of the sheet-shaped minimal surface unit cell, $y$ is a y-axis coordinate of the sheet-shaped minimal surface unit cell, and $z$ is a z-axis coordinate of the sheet-shaped minimal surface unit cell.

3. The method of claim 1, **characterized in that** an internal channel of the single-layer cylindrical porous structure is a millimeter-level channel.

4. The method of claim 1, **characterized in that** an outer diameter of the single-layer annular porous structure is $r + n \times a$; wherein $a$ is an annulus width of the single-layer annular porous structure, $n$ represents the number of the single-layer annular porous structure, and $r$ is an inner diameter of the first volume domain of the outer sub-injector.

5. The method of claim 1, **characterized in that** in step (S8), the selective laser melting is performed using a metal powder.

6. The method of claim 1, **characterized in that** the outer sub-injector is made of stainless steel, nickel-based alloy, titanium alloy or copper alloy.

7. The method of claim 1, **characterized in that** the step (S3) is performed through steps of:

projecting the sheet-shaped minimal surface unit cell onto an XOY plane to obtain a square with a side length of $a$; wherein the sheet-shaped minimal surface unit cell has a cube structure, and the origin of the coordinate system is located at a center of the square;
moving the square along a y-axis direction of the coordinate system by a length of $r$; wherein $r$ is an inner diameter of the single-layer annular porous structure;
transforming the square into the fan-shaped region by means of coordinate transformation according to a mapping method; and
circumferentially arraying the fan-shaped region with the origin of the coordinate system as center, so as to obtain the single-layer annular porous structure.

8. The method of claim 7, **characterized in that** coordinates of a point M in the fan-shaped region are $(y_1, x_1 * \pi / 2a * n)$; wherein $a$ is an annulus width of the single-layer annular porous structure, and $n$ is the number of the single-layer annular porous structure; and $x_1 = x_0$, $y_1 = y_0 + r$, $r$ is the inner diameter of the single-layer annular porous structure, and $(x_0, y_0)$ indicates coordinates of the center of the square.

9. The method of claim 1, **characterized in that** internal channels of the outer sub-injector are communicated with each other in a circumferential direction, the axial direction and a radial direction of the outer sub-injector.

(a) Unit cell distribution of a volume domain of an outer sub-injector

(b) Cross-sectional view of a porous structure of the outer sub-injector

(c) Top view of the porous structure of the outer sub-injector

Fig. 1

Fig. 2

Projecting → Mapping → Arraying

Fig. 3

Fig. 4

Fig. 5

Unit cell distribution of
first-layer cylindrical
porous structure

Unit cell distribution of
second-layer cylindrical
porous structure

Unit cell distribution of
third-layer cylindrical
porous structure

Fig. 6

Outer sub-injector
volume domain

Porous-structural
volume domain

Boolean addition of
porous-structural volume
domain and outer
sub-injector volume domain

Porous outer
sub-injector
(front view)

Porous outer
sub-injector
(cross-sectional view)

Fig. 7

Fig. 8

## INTERNATIONAL SEARCH REPORT

| International application No. |
|---|
| **PCT/CN2024/127300** |

### A. CLASSIFICATION OF SUBJECT MATTER

B22F 10/28(2021.01)i

According to International Patent Classification (IPC) or to both national classification and IPC

### B. FIELDS SEARCHED

Minimum documentation searched (classification system followed by classification symbols)

IPC:B22F，B33Y

Documentation searched other than minimum documentation to the extent that such documents are included in the fields searched

Electronic data base consulted during the international search (name of data base and, where practicable, search terms used)

CNTXT, ENTXT, VEN, WPABS, CJFD, CNKI: 发汗冷却, 隔板, 喷嘴, 单胞结构, 小曲面, 点阵, 函数, 片状, 厚度, 径向, 层数, 轴向, 体积域, 周向, 扇形, 环形, 阵列, 多孔, 布尔求和, 激光选区熔化; sweating cooling, partition, nozzle, unit cell structure, curved surface, lattice, function, sheet-like, thickness, radial, number of layers, axial, volume domain, circumferential, sector, annular, array, porous, boolean sum, SLM

### C. DOCUMENTS CONSIDERED TO BE RELEVANT

| Category* | Citation of document, with indication, where appropriate, of the relevant passages | Relevant to claim No. |
|---|---|---|
| X | CN 116213757 A (XI'AN SPACE ENGINE CO., LTD.) 06 June 2023 (2023-06-06) description, paragraphs 0005-0037 | 1-9 |
| A | CN 109365818 A (TSC LASER TECHNOLOGY DEVELOPMENT (BEIJING) CO., LTD.) 22 February 2019 (2019-02-22) entire document | 1-9 |
| A | CN 113929488 A (HUAZHONG UNIVERSITY OF SCIENCE AND TECHNOLOGY) 14 January 2022 (2022-01-14) entire document | 1-9 |
| A | CN 116697804 A (XI'AN JIAOTONG UNIVERSITY) 05 September 2023 (2023-09-05) entire document | 1-9 |
| A | US 2021060646 A1 (CHENGDU TIANQI ADDITIVE MANUFACTURING CO., LTD.) 04 March 2021 (2021-03-04) entire document | 1-9 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 December 2024** | **02 February 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/127300**

| Patent document cited in search report | | | Publication date (day/month/year) | Patent family member(s) | | | Publication date (day/month/year) |
|---|---|---|---|---|---|---|---|
| CN | 116213757 | A | 06 June 2023 | None | | | |
| CN | 109365818 | A | 22 February 2019 | None | | | |
| CN | 113929488 | A | 14 January 2022 | None | | | |
| CN | 116697804 | A | 05 September 2023 | None | | | |
| US | 2021060646 | A1 | 04 March 2021 | WO | 2019091086 | A1 | 16 May 2019 |

Form PCT/ISA/210 (patent family annex) (July 2022)

**REFERENCES CITED IN THE DESCRIPTION**

**Patent documents cited in the description**

- CN 202311410163